# EUROPEAN PATENT APPLICATION

(11) **EP 1 612 662 A2**
(43) Date of publication of application: **04.01.2006**
(21) Application number: 04258138.9
(22) Date of filing: 24.12.2004
(51) Int. Cl.: G06F 9/345

(54) **Address generator and arithmetic circuit**

(30) Priority: 30.06.2004 JP 2004193579
(71) Applicant: FUJITSU LIMITED, Kawasaki-shi, Kanagawa 211-8588 (JP)
(72) Inventor: Wakayoshi, M., Fujitsu Network Technologies Ltd., Yokohama-shi, Kanagawa 222-0033 (JP); Uriu, Shiro, M., Fujitsu Network Technologies Ltd., Yokohama-shi, Kanagawa 222-0033 (JP)
(74) Representative: Stebbing, Timothy Charles

(57) **Abstract**

A plurality of address creators are provided corresponding to a plurality of memories of ALU modules. The address creators create addresses for reading or writing data from the memories each time a connection configuration is switched. In creating addresses in the memories, the address creators enable operations to be set by using various types of parameters and set values by mounting special-purpose hardware for memory ports, so that addresses can be created at high-speed.

## Description

### CROSS-REFERENCE TO RELATED APPLICATIONS

The present document incorporates by reference the entire contents of Japanese priority document, 2004-193579 filed in Japan on June 30, 2004.

### BACKGROUND OF THE INVENTION

### 1) Field of the Invention

The present invention relates to an address creator and an arithmetic circuit, used in a cluster of reconfigurable processors having a freely-changeable connection configuration.

### 2) Description of the Related Art

There has appeared so-called reconfigurable processor technology that accommodates a plurality of clusters inside a single processor, and switches interconnections between the clusters as appropriate, and thereby aims to enable suitable processing to be executed in suitable clusters, and to increase the overall processing speed. The clusters used here each include an operation unit and a memory that holds the operation unit, and are expected to operate at high-speed.

In cluster configuration programming, operations are often executed on arrangements such as the following example: a[i]=b[i]×c[i]. In this case, addresses are specified for input data a and b, these are written in the memory, and an operation is performed. A write address is determined for an operation result c, and the operation result c is written at the determined address. In particular, in a cluster configuration, a memory address may be calculated by using an operation unit resource. In digital communication technology, more particularly in interleave processing to reduce the effects of burst error, there is a disclosed technology relating to an interleave address creator that counts from an initial value of 0 while creating addresses for interleaving. For example, Japanese Patent Application Laid-open Publication No. 2000-78030 discloses an example of this technology.

Since addresses are created continuously by software in normal processing, the processing takes time. That is, the memory address is determined by the operation, and the operation is executed by using the memory at the determined address, with the result that address-creation constitutes a processing burden, and has a poor processing efficiency.

### SUMMARY OF THE INVENTION

It is an object of the present invention to solve at least the above problems in the conventional technology.

An address creator according to an aspect of the present invention is installed in a processor that executes predetermined operation processing while switching the connection configuration of a plurality of arithmetic and logic unit (ALU) modules, each having a plurality of ALUs. The address creator includes address creating units, which are provided in one-to-one corresponds to a plurality of memories provided in the ALU modules, that create addresses for reading or writing data from/to the memories each time the connection configuration is switched.

An arithmetic circuit according to another aspect of the present invention includes a first address creator that outputs a first address, created by adding a predetermined increment to a first initial address value at a predetermined timing, together with a first token; a first memory that receives the first token, and responds by outputting data, specified by the first address, together with a second token; an operation unit that receives the second token, and responds by performing an operation based on data output from the first memory; a second address creator that outputs a second address, created by adding a predetermined increment to a second initial address value at a predetermined timing, together with a third token; and a second memory that receives the third token, and responds by writing an operation result from the operation unit at the address created by the second address creator.

An arithmetic circuit according to an aspect of the present invention includes a first read address creator that outputs a first read address, created by adding a predetermined increment to a first initial read address value at a predetermined timing; a first write address creator that outputs a first write address, created by adding a predetermined increment to a first initial write address value at a predetermined timing; a first selector that selects the input from either the first read address creator or the first write address creator, and outputs it as a first address; a first memory that inputs a first data, output from the first selector; a second read address creator that outputs a second read address, created by adding a predetermined increment to a second initial read address value at a predetermined timing; a second write address creator that outputs a second write address, created by adding a predetermined increment to a second initial write address value at a predetermined timing; a second selector that selects the input from either the second read address creator or the second write address creator, and outputs it as a second address; a second memory that inputs a second data, output from the second selector; and a sorting unit that inputs the first data from the first memory and the second data from the second memory, sorts them, and writes the first data and the second data in sorted sequence in the first memory and the second memory.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a configuration of a cluster in a reconfigurable processor according to the present invention;
Fig. 2 is a block diagram of a basic configuration of a write-to-memory operation;
Fig. 3 is a block diagram of a basic configuration of a read-from-memory operation;
Fig. 4 is a block diagram of a configuration of an arithmetic circuit that uses address creators;
Fig. 5 is a block diagram of an address creator that automatically updates by use of an update trigger;
Fig. 6 is a timing chart when an address value is updated four times in an autonomous update mode;
Fig. 7 is a timing chart when an address value is updated four times in a token update mode;
Fig. 8 is a block diagram of a configuration that controls an update starting time, performs an arithmetic operation, and outputs a result;
Fig. 9 is a timing chart of an address creator in an external operation mode;
Fig. 10 is a timing chart when a pipeline differential is set to 2;
Fig. 11 is a diagram of a bubble sort program;
Fig. 12 is a block diagram of a configuration wherein address creators are connected to memory ports when executing a bubble sort;
Fig. 13 is a block diagram of a configuration that realizes a bubble sort in a memory having two ports; and
Fig. 14 is a timing chart of phase-switching in a bubble sort.

### DETAILED DESCRIPTION

Exemplary embodiments of the present invention are explained below with reference to the accompanying drawings.

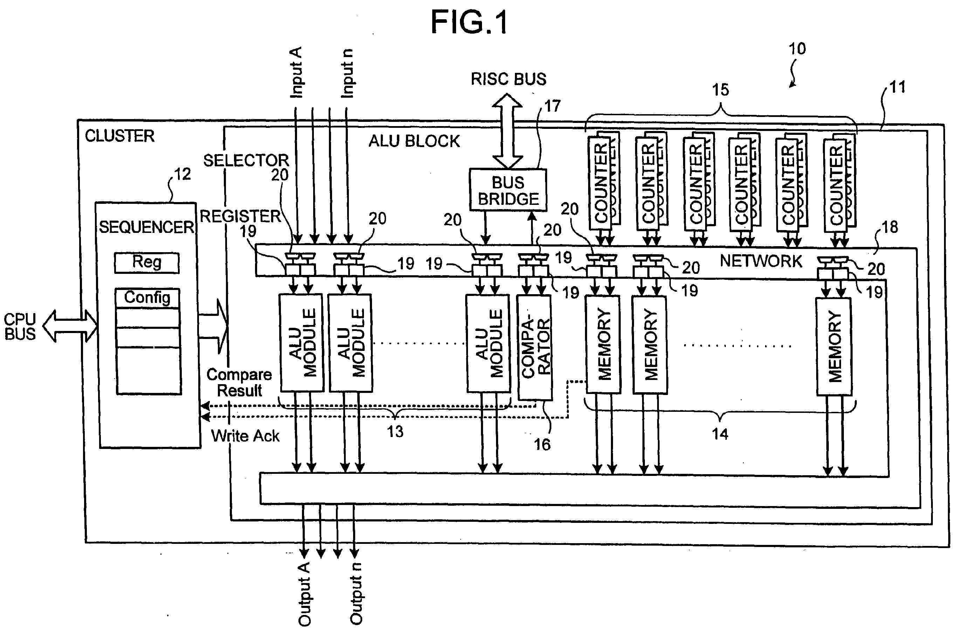

Fig. 1 is a block diagram of a configuration of a cluster of reconfigurable processors according to the present invention. The cluster 10 includes an ALU block 11 that performs actual processing, and a sequencer 12 that supplies configuration information for reconfiguration.

The ALU block 11 includes a plurality of ALU modules 13 that comprise various types of operation unit elements, memories 14 that read data being processed and store data of processing results, counters 15 that create addresses, a comparator 16 that compares (determines conditions of) two signals that are input thereto, a bus bridge 17, and a network 18. The network 18 includes registers 19 and selectors 20 at input units for signals to each of the ALU modules 13.

The connection state of a combination (selection) of the ALU modules 13, the memories 14, and the comparator 16, can be reconfigured based on the configuration information, which is output by the sequencer 12 corresponding to operation contents and the like. Changes in the connection state are switched by the selectors 20 of the network 18.

The arithmetic circuit according to the present invention is formed by combining operation units, memories, and address creators. The operation units include individual ALU modules 13, the memory includes individual memories 14, and the address creators include individual counters 15.

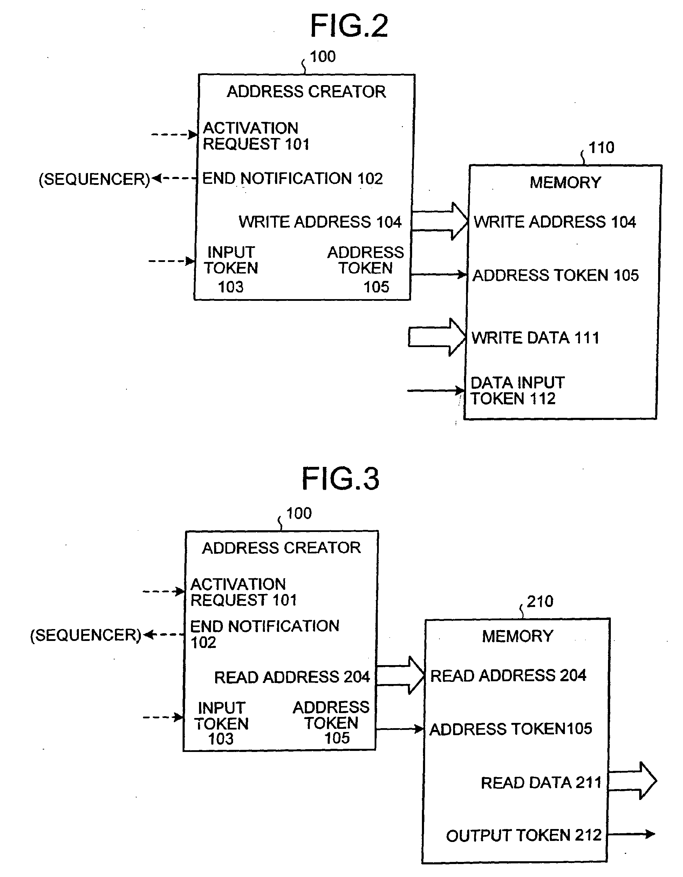

Fig. 2 is a block diagram of a basic configuration of a write-to-memory operation. An address creator 100 connects to the address write port of a memory 110. The address creator 100 autonomously creates addresses and outputs them sequentially to the memory, enabling address creation processing to be providing as separate hardware rather than by sequencer-control.

The address creator 100 receives an activation request 101 from the sequencer 12 (see Fig. 1), and starts to create addresses. When processing ends, the address creator 100 an end notification 102 to the sequencer 12. When not in autonomous update mode, the address creator 100 creates an address after inputting an input token 103. The created address is output as a write address 104. An address token 105 is also output at this time.

Having a token indicates the authority to perform processing. The processor performs the processing while having the token, and, when processing ends, outputs the token to the next processor, passing the processing authority to the next processor. In the present case, the address creator 100 sends the address token 105 to the memory 110, passing processing to the memory 110.

The memory 110 inputs the write address 104 and the address token 105, while inputting a write data 111 and a data input token 112 to its other port. The input write data 111 is written at the write address 104, specified in the memory 110.

Fig. 3 is a block diagram of a basic configuration of a read-to-memory operation. The address creator 100 connects to the address reading port of a memory 210. The address creator 100 autonomously creates addresses and outputs them sequentially to the memory, enabling address creation processing to be provided as separate hardware rather than by sequencer-control.

The operation of the address creator 100 is the same as that in the write-to-memory operation explained in Fig. 2. However, the address is not output as the write address 104, but as a read address 204. Since data is not being written here, no write data is input. The data is read by inputting the read address 204 and the address token 105 to the memory 210. A read data 211, stored at the read address 204 that is specified in the memory 210, is read and output. An output token 212 is also output with the read data 211.

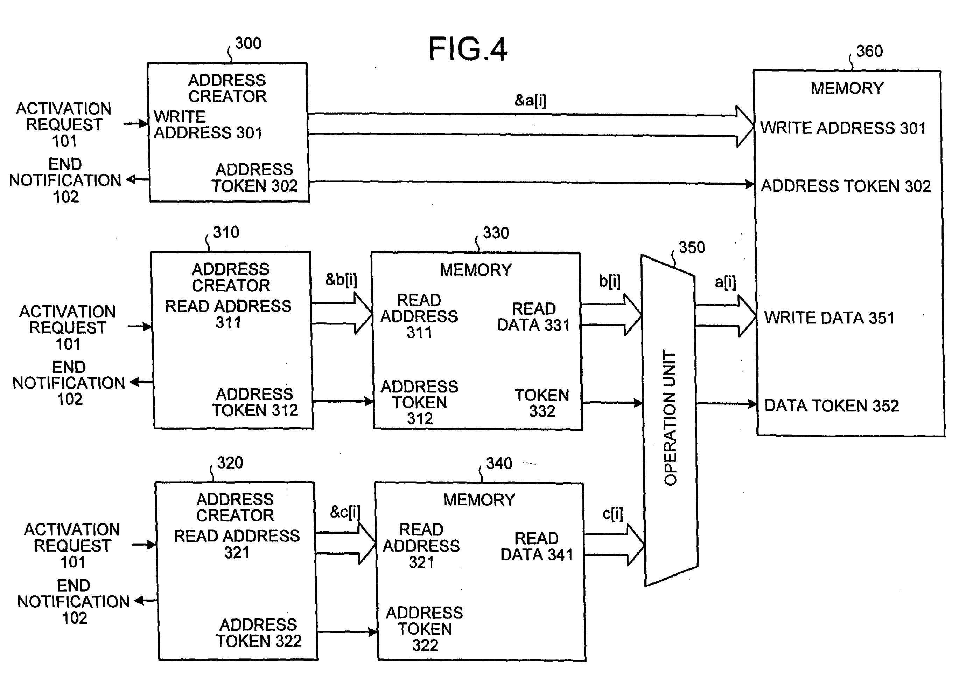

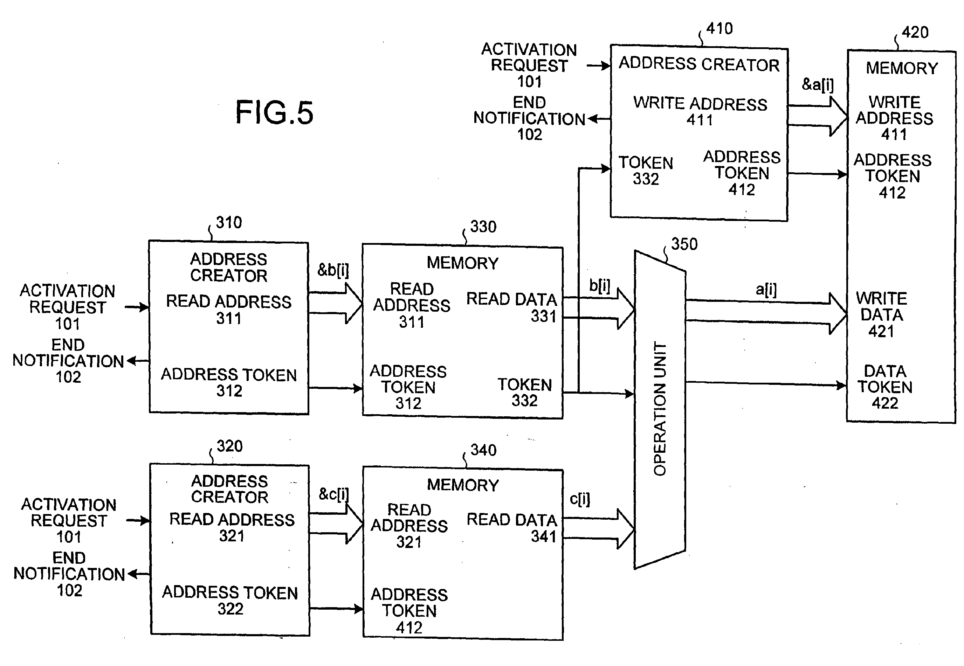

A circuit configuration that performs an operation by use of an address creator and a memory, and outputs the operation result, will be explained next with reference to Figs. 4 and 5. For example, when operating a[i]=b[i]xc[i], a[i] may be allocated to memory A, b[i] to memory B, and c[i] to memory C. Since data is written to memory A, the address creator is provided for writing. Since data is read from memories B and C, address creators are provided for reading. By creating addresses 0 to 255 corresponding to i, data can be read/written to and from the memories at each clock in synchronization with these address creators.

The address creator starts operating when it inputs a command from the sequencer 12, and, when its operation ends, sends an operation end signal to the sequencer 12. The address creator holds an address value, and continuously outputs the held address value. A token is also output with the address value. The initial value of the address value is loaded at the start, and the address value is updated according to predetermined update timings.

Fig. 4 is a block diagram of a configuration of an arithmetic circuit that uses address creators. In Fig. 4, a[i] and &a[i] are separately identified by a reference sign "&", a[i] representing data and &a[i] representing an address where the data is to be read/written.

An address creator 310 outputs a read address 311 it holds, and an address token 312. The first address is a loaded initial value, and the address value is updated by increments each time a clock is input. A memory 330 receives the read address 311 and the address token 312, output from the address creator 310, and sends a read data 331, which is stored at the address specified by the read address 311, together with a token 332, to an operation unit 350.

An address creator 320 outputs an address it holds with an address token. The first address is a loaded initial value, and the address value is updated by increments each time a clock is input. A memory 340 receives the read address 321 and an address token 322, output from the address creator 320, and sends read data, which is stored at the address specified by the read address 321, to the operation unit 350 as read data 341.

The operation unit 350 receives the read data 331 and 341, output from the memories 330 and 340, and performs an operation. While example mentioned earlier is a multiplication, any operation of addition, subtraction, multiplication, and division, may be used. On the other hand, an address creator 300 outputs an address its holds together with a token. The first address is a loaded initial value, the address being updated in increments each time the clock is input.

A memory 360 receives a write address 301 and an address token 302 from the address creator 300, receives write data 351 and a data token 352 from the operation unit 350, and writes the operation result.

Fig. 5 is a block diagram of a configuration of an address creator that automatically updates by use of an update trigger. The update trigger of the address creator has (1) an autonomous update mode or (2) a token update mode.

### (1) Autonomous Update Mode

In the autonomous update mode, the address is autonomously updated, and an output token is created, at each input of a clock signal after an operation starts. The timing of an address update is autonomously triggered only by the input of the clock signal, and not by the input of the token.

### (2) Token Update Mode

In token update mode, the address is updated when a token is input. The timing of the address update is triggered not by a clock timing but by the input of the token, so that the update timing is not autonomous but can be controlled by an input from another circuit. For example, by waiting for the token to be input, the update timing of the address can be matched with an arrival timing of data to be written at an address output by the address creator.

The operations of the address creator 310, the address creator 320, the memory 330, the memory 340, and the operation unit 350, are the same as those in Fig. 3, and will not be explained further. The token 322 is output not only to the operation unit 350 but also to an address creator 410.

The address creator 410 outputs a write address 411 it holds, together with an address token 412. The first value of the write address 411 is a loaded initial value, updated in increments at each input of the token 332.

A memory 420 receives the write address 411 and the address token 412 from the address creator 410, receives write data 421 and a data token 422 from the operation unit 350, and writes data of the operation result shown by the write data 421 at an address shown by the write address 411.

### Address Creator

### (1) Basic Setting Contents of Address Creator

The basic setting contents of the address creator are an initial value, an increment value, a number of updates, and an update trigger mode setting. The initial value is the initial value of the address. The increment value is a value that is added to the address whenever necessary. Assuming addition only, the increments can be whole numbers without reference codes. Assuming subtraction, they can be expressed numerically by appending a reference code bit to the main field, or by adding an absolute value to the reference code bit.

The basic operation of the address creator is as follows. First, (1) the address creator is activated by a signal from the sequencer 12. When the address creator activates, the initial value of an address is loaded to an internal counter inside the address creator. Thereafter, (2) at an update timing specified by the input of a clock signal in the case of autonomous updating, or by the input of a token in token update mode, the counter value at that time is output as a create address value. An output token is output simultaneously.

Thereafter, (3) the counter value is updated by adding the increment value to the counter value, and (4) when the number of additions to the counter value has reached a set number, the output of the counter value and the token is terminated. The sequencer 12 is then notified of this termination.

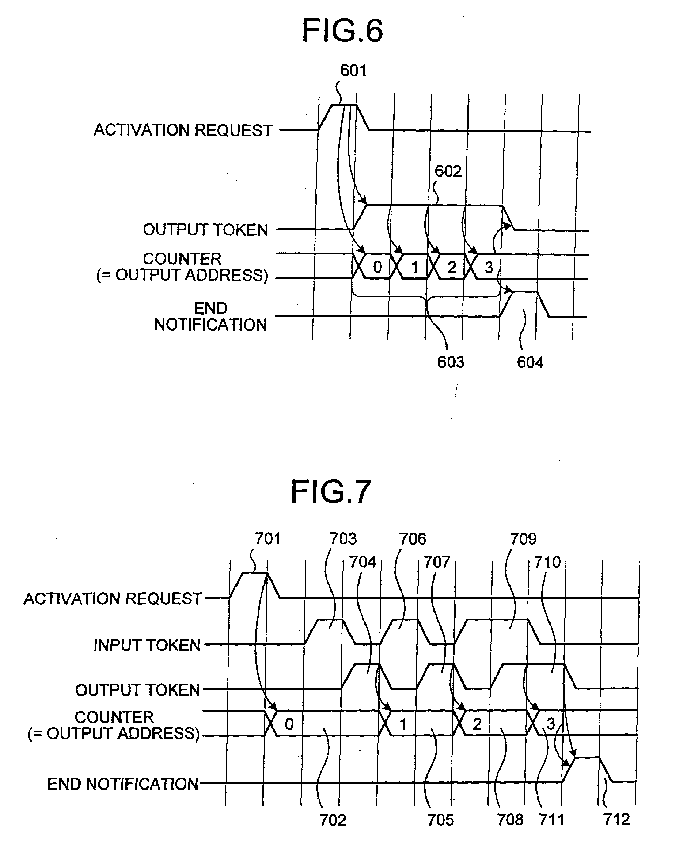

Fig. 6 is a timing chart when an address value is updated four times in autonomous update mode. Autonomous update mode is used for the head cluster of a cluster group, or when using only one cluster, and the like, and is effective when used as a master for token processing, for example.

An activate request 601 is input, and the initial value of the address is loaded with it. Upon receiving this, an output token 602 is created, and is output with the initial value of the address. While the output token 602 is output continuously, an increment value is added to the initial value.of the address each time a clock signal is input, updating an output address 603. When a predetermined number of updates is reached, the output token 602 becomes zero and its output ends, and an end notification 604 is output.

Fig. 7 is a timing chart when an address value is updated four times in token update mode. Token update mode is used for the downstream cluster of a cluster group and the like, and is effective when used as a slave for token processing, for example.

An activate request 701 is input, the initial value of the address is loaded with it, and an output address 702 is output. The address is output and updated after waiting for an input token 703 to be input. When the input token 703 is input, an output token 704 is created and output one clock later, and the initial value of the address is output at that time. The address is updated another clock later, the increment value is added to the initial value of the address, and this becomes an output address 705.

When an input token 706 is now input, an output token 707 is created again and output one clock later, and an updated address is output. Similarly, the address is updated another clock later, the increment value is added to the address, and this becomes an output address 708.

Another input token 709 is input. Similarly, an output token 710 is created again and output one clock later, and the output address 708 is output. Similarly, the address is updated another clock later, and the increment value is added to the address. Since the input token 709 remains on the rise, the output token 710 does not fall, and an updated output address 711 is output.

Since the input token 709 falls at the update timing of the address, the output token 710 falls one clock later. Including the initial value, the address has now been output four times, and so output ends and an end notification 712 is output.

### (2) End Notification Setting

The end notification that is output by the address creator may be considered for use as a configuration switch trigger in a sequencer 12. However, the sequencer 12 does not need to use end notification, and can, for example, switch its configuration by referring to a flag from the operation unit. In addition, the configuration may be arranged so that the sequencer 12 refers to end notifications from not all but only some of the address creators, so that there are address creators that do not send end notifications to the sequencer 12.

### (3) Setting an Increment Value

With an increment value of 1, the counter value can be increased by a value of 1 each time. The increment value can be a power-of-two. For example, in the case of word unit data, since a bit number of the data is a power-of-two, it is useful to make the counter increase a power-of-two. In this case, it is set to n of 2ⁿ. Moreover, the increment value can be a variable.

### (4) Setting an Update Start Time

An update start time, at which the token is output and the address is updated, can be set in the address creator. The time can be specified by a clock number. The configuration is such that the output from a circuit that specifies the update start time is added to the output from the circuit configuration that receives the output of the address creator described above and performs two operations on memory. This enables token output and address update to start from a predetermined update start time.

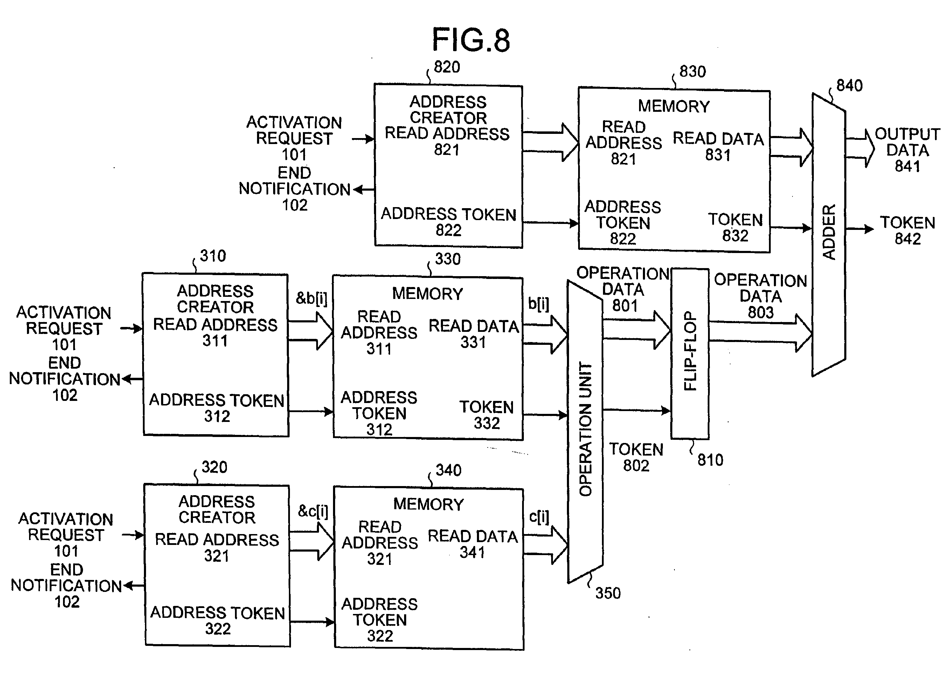

Fig. 8 is a block diagram of a configuration that controls the update start time, performs an operation, and outputs it. The operations of the address creator 310, the address creator 320, the memory 330, the memory 340, and the operation unit 350, are the same as those in Fig. 3 and will not be further explained. The operation unit 350 outputs its operations result as operation data 801 and a token 802. The output is input to an FF (flip-flop) 810 and stored therein, then output to an adder 840.

An address creator 820 outputs a read address 821 it holds, together with an address token 822, to a memory 830. The first address is the loaded initial value, the address being updated in increments each time a clock is input. The memory 830 receives a read address 821 and the token 822 from an address creator 820, and outputs read data 831, stored at the address specified by the read address 821, together with a token 832, to the adder 840.

Operation data 803 and the read data 831 are input to the adder 840, which receives the token 832 and adds them, outputting output data 841 and a token 842.

Thus the address creator 820 must start updating one clock later than the address creator 310 and the address creator 320. The update start time of the address creator 310 and the address creator 320 is set to 0, and the update start time of the address creator 820 is set to 1. This setting indicates the time taken by the transition from loading the initial value of the address to updating the address.

Other methods for delaying the update start time may be considered: (1) setting the downstream address creators to token update mode; and (2) reading from memory at time 0, and inserting a great number of flip-flops after the memory to create a delay.

### (5) Setting an Update Interval

The update interval is one item that can be set in the address creator. The time of the update interval is specified by the clock number. The specified interval specifies the interval between token output and address update. This is particularly effective when, for some reason or other, memory data must be input discretely downstream in a pipeline, for example, when operation does not end in one clock, or the like. While the update interval is normally one clock unit unless set otherwise, it can be set to 2, 3, ... , 255.

### (6) Setting an End Notification Delay

Since the cluster has a pipeline configuration, it is sometimes desirable to delay sending an end notification to the sequencer 12, such as when outputting from an upstream address creator. In this case, the end notification of a set clock number can be delayed by setting the end notification delay time in the address creator. The end notification is delayed in anticipation of the end, and then sent.

### (7) Setting a Load Prevention for an Initial Address Value

It is sometimes desirable to prevent loading of the initial address value or the like at the time of reconfiguring, such as when updating the configuration to handle an "if" sentence in a program being executed. Accordingly, by setting a load prohibit in the address creator, even when there is an activate request from the sequencer 12, loading of the initial address value and the like can be prevented at the time of activation. This setting can be made common to all parameter values such as the initial address value, the count-up value, and the like, or can be set individually for each parameter, with some loadings being allowed and some prevented.

### (8) Setting an External Operation Mode (FF Operation Mode)

It is sometimes necessary to use the operation unit for address operation, such as when making the increment value variable. In this case, it may be preferable that the address creator operates simply as a loadable flip-flop. By setting the address creator to external operation mode, and inputting an address update value that is operated in another cluster, the address update value can be set to the mode being loaded from the operation unit. In this case, the internal counter is stopped, and the address update value is loaded when an input token is received.

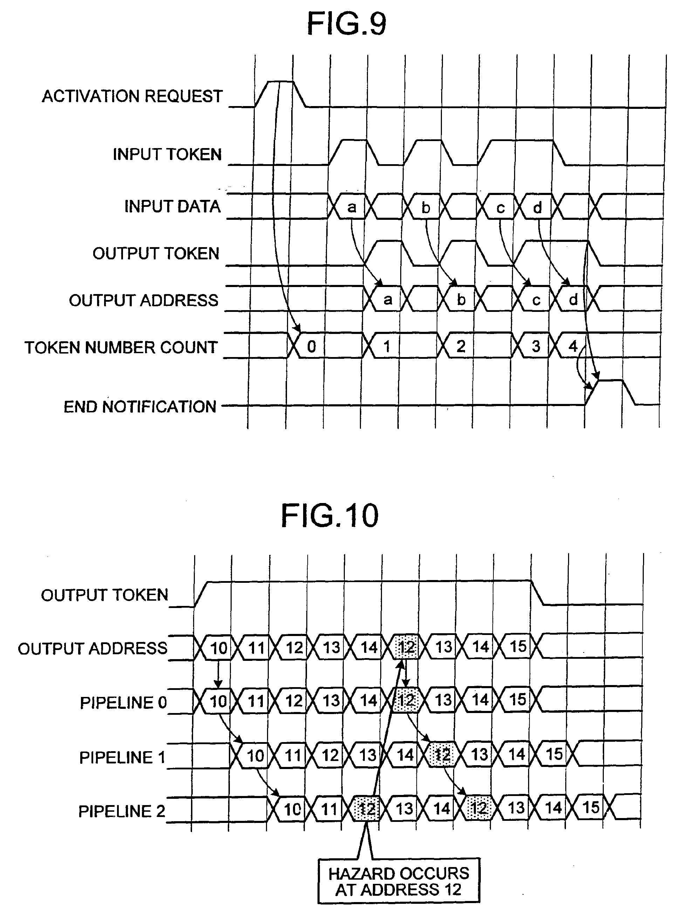

Fig. 9 is a timing chart of the address creator in the external operation mode. First, the activate request is input. When input data is input together with the input token, an output token is created one clock later. The input data becomes the output address, and is output with the output token, and the token number, which is 0 at the time of the activate request, is counted up to 1.

One more clock later, when the input token is input together with the input data, an output token is created one more clock later. Similarly, the input data becomes the output address, and is output with the output token, and the token number, which is 1 at the time of the activate request, is counted up to 2. One more clock later, when the input token is input together with the input data, an output token is created one more clock later. Similarly, the input data becomes the output address, and is output with the output token, and the token number, which is 2 at the time of the activate request, is counted up to 3. Since the input token is input in two consecutive clocks, another input token is input here.

Therefore, one more clock later, the output token continues to rise, while the input token falls. Similarly, the input data becomes the output address, and is output with the output token, and the token number, which is 3 at the time of the activate request, is counted up to 4. The output token now falls corresponding to the input token, and the token number counter reaches the set value of 4, whereby an end notification is sent and processing ends.

Two methods for end notification can be used. (1) Counting the number of input tokens in the address creator, and sending the notification from the address creator. (2) Sending the end notification via a comparator of an external operation unit in another cluster, without counting the number of tokens in the address creator. The timing chart of Fig. 9 illustrates the case (1).

### (9) Setting Values by an External Input

In a multiplex loop or the like, where the number of inside loops is determined; rather than an external operation result and the like, it is sometimes desirable to write a set value from the operation unit. Accordingly, the address creator is given a setting item termed as an operation setting, so that an output result from the operation unit can be written to this setting. That is, this operation setting determines the set value from the operation result of the operation unit. When implementing this function, a register is required to store set values determined by the operation unit inside the address creator. The initial value of the address can be loaded directly to the counter. This setting can be made common to all parameter values such as the address initial value, the count-up value, and the like, or can be set individually for each parameter, with some loadings being allowed and some prevented.

### (10) Address Rewind Setting

It is sometimes desirable to rewind a created address when a hazard has occurred in the pipeline. Methods for dealing with this will be explained next.

### (A) Subtracting a Fixed Value

When a rewind request is generated, a set value is subtracted from a present address value. The rewind value is set in the address creator, and is subtracted from the present address value. When counting down, this value can be set to a negative number, in which case it is actually executed as an addition.

### (B) Method of storing an issued address in the pipeline and loading the stored address.

Normally, an issued address is input to a shift register that forms the pipeline. When a rewind request is generated, the issued address at a set number ahead is loaded. This enables the number of pipeline levels to be set, and, when a rewind request is generated, the issued address is loaded at a position ahead by a specified number of clocks.

Fig. 10 is a timing chart when the number of pipeline levels is set to 2. While the output token is 1, the output address is counted from 10 to 14, and a rewind request is made before it reaches 15. The output address momentarily returns to 12, and is then counted from 13 to 15. This example will be explained next.

There are pipelines 0, 1, and 2. An output address is passed unaltered to the pipeline 0, to the pipeline 1 one clock later, and to the pipeline 2 another clock later. While the output address 14 is counting, the pipeline 2 is counting 12. It is assumed here that a hazard occurs at an address 12. Notification is sent of the need to rewind, and the count 14 recounts from 12, then 13, 14, and 15. The output address operation is transmitted in the same manner to pipelines 0 to 2, until the rewind operation finally ends.

While counting the number of address creations, this number may sometimes need to be subtracted, and in this case, the number of rewinds can be set. The number of rewinds is a value subtracted from the present number of address issuances when a rewind request is generated, and matches the pipeline number.

In method (B), instead of the number of rewinds having a fixed value, the number of valid issued addresses on the pipeline may be counted and subtracted. Alternatively, as in method (B), the number issued at that time may be input to the pipeline, then read from the pipeline and loaded. To append such a function, the address creator must be able to input rewind requests from the outside.

### Address Creator Selection Function for Bubble Sort Operation

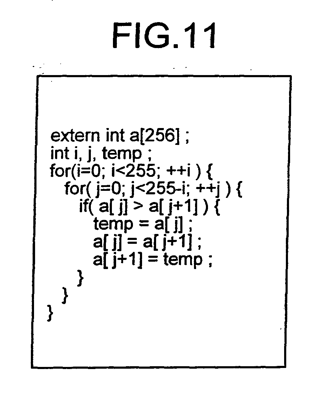

While it is assumed that the address creator is normally connected to the address port of the memory in a 1:1 arrangement, according to the bubble sort program of Fig. 11, there are cases that two or more write/read address creators are needed at one memory address, such as &a[j] and &a[j+1].

A bubble sort is a type of sorting algorithm. For example, with n arrangements, adjacent elements are compared from the last element in the arrangement, and, when the value in the preceeding arrangement is greater than the one behind, the preceeding element is switched with the one behind it. This is repeated until the head element, so that the smallest value appears at the head. The process is then repeated excluding the head element, so that the second smallest value appears as the second element. By repeating this process, the elements can be arranged in an increasing sequence from the head.

Fig. 11 is a schematic diagram of a bubble sort program. A loop runs from i=0 to 255, within which is a loop from j=0 to 255. In the j loop, a[j] is compared with a[j+1], and they are switched when a[j] is greater. This comparison is repeated for j=0 to 255, and then once again from j=0. This is then repeated for i=0 to 255.

The individual processes of the bubble sorting includes comparing of two adjacent numbers and switching them. Therefore, addresses can be specified and read from two adjacent memories, and reinserted into the memories after sorting the addresses.

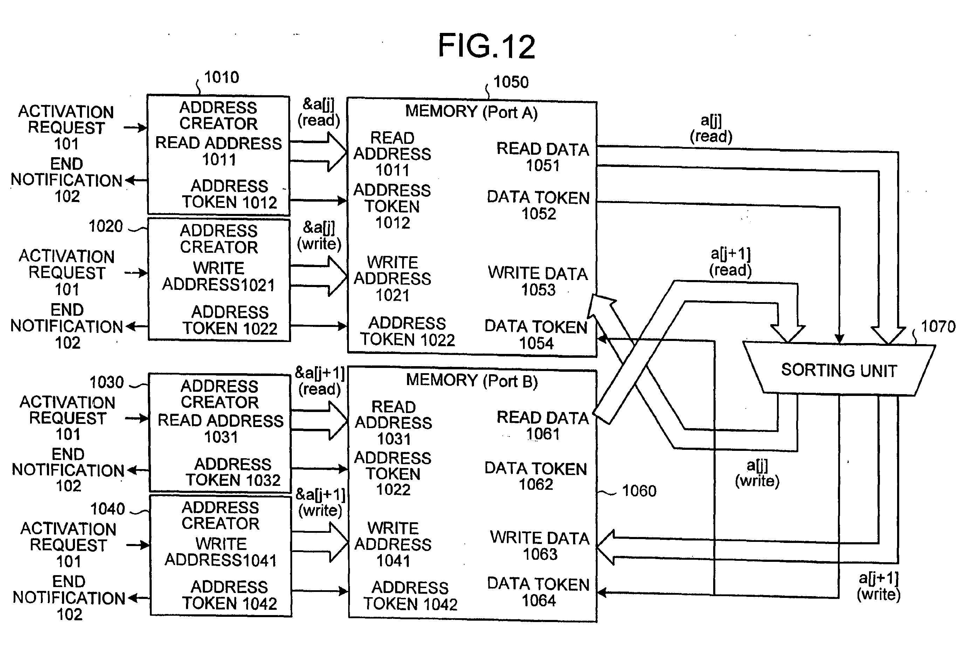

Fig. 12 is a block diagram of a configuration wherein address creators are connected to memory ports when executing a bubble sort. As shown in this example, tokens and addresses for reading from a memory are connected, and tokens and addresses for writing to the memory are also connected, so that there are two configurations of these pairs. The memories input to the sorts, whose outputs are reversed and write to the respective memories, whereby the data sequences are switched.

In the read phase, an address creator 1010 outputs a read address 1011 and an address token 1012 to a memory 1050. An address creator 1030 outputs a read address 1031 and an address token 1032 to a memory 1060.

The memory 1050 outputs the data at the specified address as read data 1051, together with a token 1052, to a sorting unit 1070. The memory 1060 outputs the data at the specified address as read data 1061, together with a token 1062, to the sorting unit 1070. The sorting unit 1070 compares the read data 1051 with a read data 1061, leaving them unaltered when the read data 1051 is smaller, and switching them when the read data 1051 is greater.

The process shifts to the write phase here. Data output from the sorting unit 1070 are rewritten in the memories 1050 and 1060, after the addresses are specified. That is, an address creator 1020 outputs a write address 1021 with an address token 1022 to the memory 1050, while an address creator 1040 outputs a write address 1041 with an address token 1042 to the memory 1060.

The sorting unit 1070 outputs the data, to be written in the memory 1050, as write data 1053, together with a token 1054, to the memory 1050, and outputs the data, to be written in the memory 1060, as write data 1063, together with a token 1064, to the memory 1060. The memory 1050 writes the write data 1053 at the specified address, and the memory 1060 writes the write data 1063 at the specified address.

While a conventional memory normally has no more than two read/write ports, the example of Fig. 12 requires four ports. Therefore, in this respect, the configuration is not realistic.

Accordingly, time-division switching is used to separate read phase and write phrase. During read phase, an address creator that creates a read address is connected to memory, and during write phase, an address creator that creates a write address is connected to a memory, enabling a memory having two ports to realize bubble sorting.

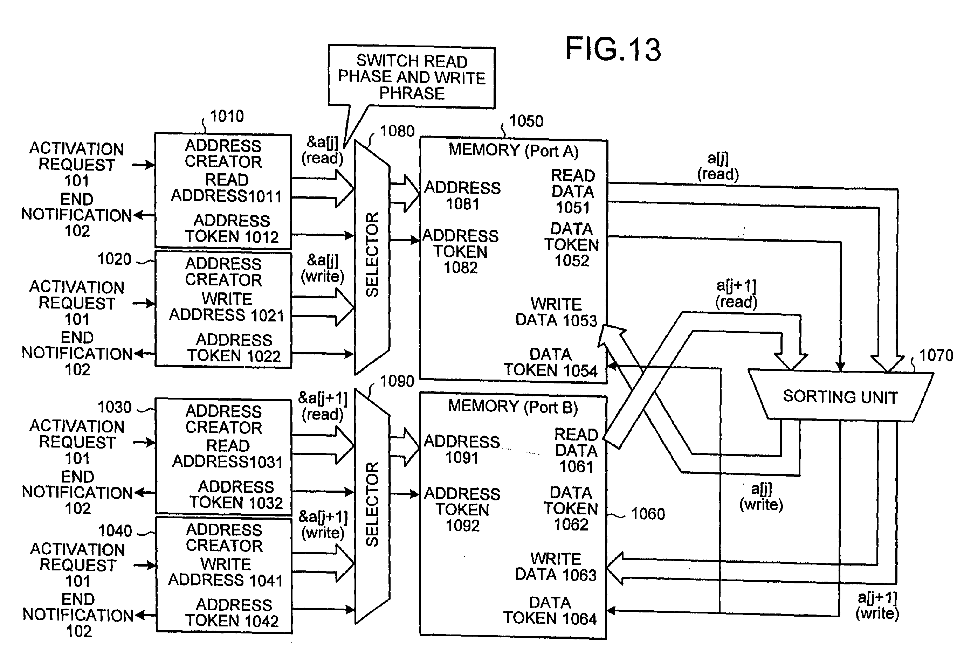

Fig. 13 is a block diagram of a configuration that realizes bubble sorting in a memory having two ports. Selectors are inserted between the address creators and the memories, so that it is possible to switch between a read phase and a write phase. The read phase and the write phase have the same configuration, and are controlled by time-division. To realize this, the input timing of write data must be matched with a write phase timing.

This configuration differs from that of Fig. 12 in that a selector 1080 is inserted between the address creators 1010 and 1020 and the memory 1050, and a selector 1090 is inserted between the address creators 1030 and 1040 and the memory 1060. The selectors 1080 and 1090 respectively select the address creators 1010 and 1030 in read phase, and respectively select the address creators 1020 and 1040 in write phase.

The selectors 1080 and 1090 can realize a bubble sort by using the address creator even when the memories 1050 and 1060 have only two read/write ports, not four. Most of the processing is the same as that in Fig. 12, a difference being that the read/write ports are divided into two sections.

In Fig. 12, the address creator 1010 writes the read address 1011 and an address token 1012, and the address creator 1020 writes the write address 1021 and an address token 1022, directly to the memory 1050. In Fig. 13, the above signals are first input to the selector 1080, and output as an address 1081 and an address token 1082 to the memory 1050.

Similarly, the selector 1090 first inputs a read address 1031 and an address token 1032 from the address creator 1030, and a write address 1041 and an address token 1042 from the address creator 1040, and then outputs them to the memory 1060 as an address 1091 and an address token 1092. Processing after these are output to the memories 1050 and 1060 is the same as in Fig. 12, and will not be explained further.

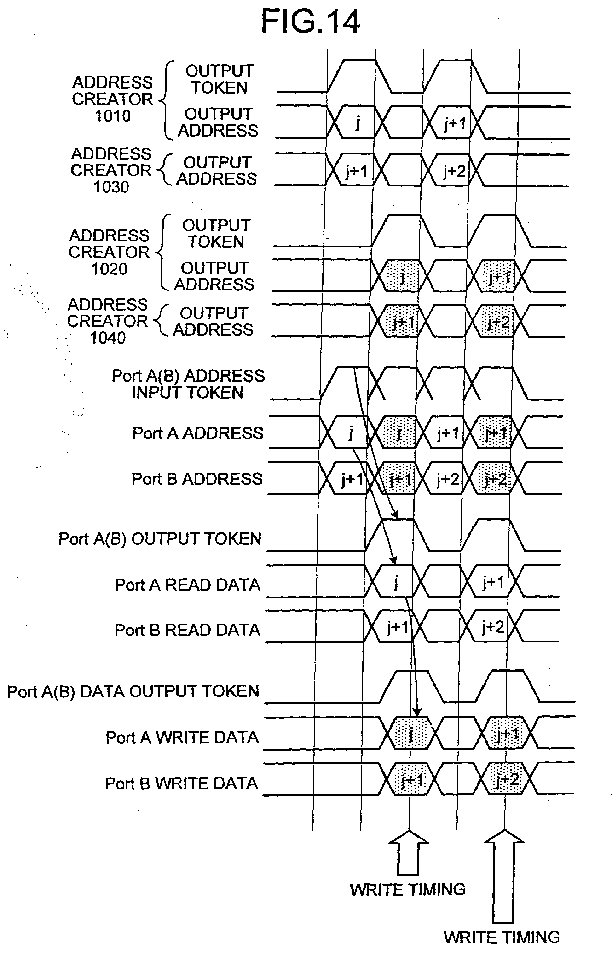

Fig. 14 is a timing chart of phase-switching in a bubble sort. The timing chart of Fig. 14 will be explained with reference to Fig. 13 and the configuration of Fig. 12 that is used in Fig. 13. In the first phase, the address creators 1010 and 1030 output read addresses and address tokens, and the memories 1050 and 1060 receive inputs of read addresses 1011 and 1031, and address tokens 1021 and 1032.

In the next phase, the memories 1050 and 1060 output read data 1051 and 1061 and data tokens 1052 and 1062. The selectors 1080 and 1090 shift from read phase to write phase, and the address creators 1020 and 1040 output write addresses 1021 and 1041 and address tokens 1022 and 1042. The memories 1050 and 1060 receive inputs of the write addresses 1021 and 1041 and address tokens 1022 and 1042.

By alternately switching between read phase and write phase in the above manner, bubble sorting can be realized when using memories having two ports. When 1 RW memories are used as the memories, 4:1 selectors are used, enabling four phases to be managed.

According to the configuration described above, in creating addresses for memory, operations can be set by using various types of parameters and set values by mounting special-purpose hardware for the memory ports, thereby creating addresses at high-speed. Consequently, data required in operations can be speedily read, and operation results can be speedily stored in memory, so that the overall processing capability is improved.

As described above, the address creator and the arithmetic circuit according to the present invention are effective when wanting to use hardware to create addresses for inputting to memory, and are particularly suitable for clusters, used in a reconfigurable processor.

According to the address creator and the arithmetic circuit of the invention, since addresses can be speedily created, data required for operation can be speedily read from memory, and the operation result can be speedily written to memory, thereby increasing the processing capability of the cluster.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An address creator, installed in a processor that executes predetermined operation processing while switching the connection configuration of a plurality of arithmetic and logic unit (ALU) modules, each having a plurality of ALUs, the address creator comprising
a plurality of address creating units, which are provided respectively corresponding to a plurality of memories provided in the ALU modules, said address creating units creating addresses for reading or writing data from/to the memories each time the connection configuration is switched.

2. The address creator according to claim 1, wherein each address creating unit has an address counter that sets an initial value of an address, an increasing or decreasing address increment value, a number of address creations, and an address create mode, based on an external input from a sequencer that controls switching of the connection configuration.

3. The address creator according to claim 2, wherein the address counters can select either one of:
an autonomous update mode that, after an activate request by the sequencer, autonomously creates an updated address, and appends a token bit indicating the validity of output data to the data; and
a token update mode that, after an activate request from the sequencer, updates the address at each input of the token bit indicating the validity of data, and, based on the input of the token bit, appends a token bit indicating the validity of the output data to the data.

4. The address creator according to claim 2, wherein the address counters increment addresses based on an input timing of a clock signal.

5. The address creator according to claim 2, wherein each address counter comprises an increase-setting unit that sets a predetermined increment value to be added.

6. The address creator according to claim 2, wherein the address counters can set addresses operated by the ALU modules.

7. The address creator according to claim 2, comprising a load reception setting unit that sets whether to receive an initial value of the address from the sequencer.

8. The address creator according to claim 2, wherein each address counter further comprises a mode switching unit, and, when the mode switching unit includes an external operation mode, the address counter stores and outputs externally-input data without adding the predetermined increment value.

9. The address creator according to claim 2, wherein the address counters comprise rewind units that rewind addresses by reducing them at the time of updating.

10. The address creator according to claim 2, wherein the address counters stop updating a predetermined increment value when the number of address creations has reached a predetermined number, and output an end signal to the sequencer.

11. The address creator according to claim 3, wherein the address counters comprise interval setting units that set intervals between creating addresses when in the autonomous update mode, based on an external input from the sequencer.

12. The address creator according to claim 5, wherein the predetermined increment value set by the increase setting unit is a power-of-two, and the increase setting unit sets the predetermined increment value as an exponent of the power-of-two.

13. The address creator according to claim 10, further comprising a delay unit that delays the timing at which the end signal is output.

14. The address creator according to claim 1, wherein each address creating unit includes
a read address creating unit that outputs a read address in the memory, and a write address creating unit that outputs a write address in the memory; and
a selector that, when reading data from the memory, connects the read address creating unit to the memory, and, when writing data to the memory, connects the write address creating unit to the memory.

15. An arithmetic circuit comprising:
a first address creator that outputs a first address, created by adding a predetermined increment to a first initial address value at a predetermined timing, together with a first token;
a first memory that receives the first token, and responds by outputting data, specified by the first address, together with a second token;
an operation unit that receives the second token, and responds by performing an operation based on data output from the first memory;
a second address creator that outputs a second address, created by adding a predetermined increment to a second initial address value at a predetermined timing, together with a third token; and
a second memory that receives the third token, and responds by writing an operation result from the operation unit at the address created by the second address creator.

16. The arithmetic circuit according to claim 15, further comprising a buffer that stores operation results from the operation unit; wherein
the second memory writes the operation result, which is written in the buffer.

17. An arithmetic circuit comprising:
a first read address creator that outputs a first read address, created by adding a predetermined increment to a first initial read address value at a predetermined timing;
a first write address creator that outputs a first write address, created by adding a predetermined increment to a first initial write address value at a predetermined timing;
a first selector that selects the input from either the first read address creator or the first write address creator, and outputs it as a first address;
a first memory that inputs a first data, output from the first selector;
a second read address creator that outputs a second read address, created by adding a predetermined increment to a second initial read address value at a predetermined timing;
a second write address creator that outputs a second write address, created by adding a predetermined increment to a second initial write address value at a predetermined timing;
a second selector that selects the input from either the second read address creator or the second write address creator, and outputs it as a second address;
a second memory that inputs a second data, output from the second selector; and
a sorting unit that inputs the first data from the first memory and the second data from the second memory, sorts them, and writes the first data and the second data in sorted sequence in the first memory and the second memory.
